Europäisches Patentamt

European Patent Office

Office européen des brevets

(19)

(11) EP 0 821 225 A1

(12) DEMANDE DE BREVET EUROPEEN

(43) Date de publication:
28.01.1998 Bulletin 1998/05

(51) Int Cl.$^6$: G01N 13/02, H01M 4/62

(21) Numéro de dépôt: 97401746.9

(22) Date de dépôt: 21.07.1997

(84) Etats contractants désignés:
AT BE CH DE DK ES FI FR GB GR IE IT LI LU MC NL PT SE

(30) Priorité: 26.07.1996 FR 9609451

(71) Demandeur: SAFT
F-93230 Romainville (FR)

(72) Inventeurs:
• Cocciantelli, Jean-Michel
  33000 Bordeaux (FR)

• Coco, Isabelle
  33405 Talence Cedex (FR)
• Villenave, Jean-Jacques
  33405 Talence Cedex (FR)

(74) Mandataire: Laroche, Danièle et al
c/o ALCATEL ALSTHOM,
Département de Propriété Industrielle,
30, avenue Kléber
75116 Paris (FR)

(54) **Procédé de caractérisation d'un liant pour électrode**

(57) L'invention porte sur un procédé de caractérisation d'un liant polymère pour une électrode de générateur électrochimique comportant un collecteur de courant et une pâte contenant une matière électrochimiquement active et ledit liant. On calcule un coefficient d'étalement $\lambda$ du liant sur la matière active à partir de la mesure de l'angle de contact entre des liquides étalons et respectivement la matière active et le liant; on calcule une énergie d'interaction $I_{EL}$ du liant avec l'électrolyte à partir de la mesure de l'angle de contact entre l'électrolyte et le liant; on sélectionne le liant tel que $\lambda$ soit inférieur à zéro et $I_{EL}$ soit au moins égale à 60mJ/m$^2$.

## Description

La présente invention concerne un procédé de caractérisation d'un liant pour électrode. Elle s'étend en outre au liant sélectionné par ce procédé et aux électrodes le contenant.

Une électrode de type plastifié, appelé aussi non-fritté, se compose d'un support servant de collecteur de courant sur lequel on enduit une pâte contenant la matière active pulvérulente et un liant, auquel on ajoute éventuellement un matériau conducteur.

Le liant a pour fonction d'assurer la cohésion des grains de matière active entre eux et sur le support de l'électrode, avant l'assemblage de l'accumulateur et durant son fonctionnement. D'une part le liant doit posséder une stabilité chimique suffisante vis à vis des composants du générateur électrochimique; or certains liants présentent une dégradation de leurs propriétés adhésives au cours du cyclage. D'autre part le liant doit être capable d'accompagner les variations dimensionnelle de l'électrode au cours du cyclage pendant toute sa durée de vie.

Le liant a également pour fonction de maintenir le contact électrique entre les grains de matière active et de favoriser les échanges ioniques avec l'électrolyte. D'une part la surface électrochimiquement active d'une électrode dépend de la surface mouillée par l'électrolyte. Si l'électrode est insuffisamment mouillée, la surface active est diminuée, ce qui entraîne une augmentation de la densité de courant local et une plus faible capacité chargée. Pour favoriser la mouillabilité de l'électrode par l'électrolyte aqueux, le liant doit posséder un caractère hydrophile. D'autre part la surface accessible à l'électrolyte dépend de la manière dont les grains de matière active sont enrobés et liés par le polymère. Le film de polymère doit présenter des discontinuités permettant les échanges électroniques.

Actuellement le choix d'un liant approprié passe par une évaluation électrochimique dans les conditions réelles d'utilisation. Le faible taux de liant utilisé dans la fabrication d'une électrode nécessite des tests de longue durée pour mettre en évidence des différences de performances entre les électrodes comportant les différents liants à évaluer. Dans ces conditions, l'optimisation de la composition des électrodes est lente et aléatoire, ce qui limite considérablement les possibilités d'amélioration des batteries.

La présente invention a pour but de proposer une méthode de sélection d'un liant apte à entrer dans la composition d'une électrode et lui conférant des performances élevées pendant toute sa période d'utilisation.

L'invention a également pour but de proposer une méthode rapide et facile à mettre en oeuvre pour le choix d'un liant d'électrode.

L'objet de la présente invention est un procédé de caractérisation d'un liant polymère pour électrode de générateur électrochimique au contact d'un électrolyte comportant un collecteur de courant et une pâte contenant une matière électrochimiquement active et ledit liant, caractérisé en ce qu'il comprend les étapes suivantes:

- on calcule un coefficient d'étalement $\lambda$ dudit liant sur la matière active à partir de la mesure des angles de contact $\Theta_{MA}$ et $\Theta_{liant}$ entre des liquides étalons et respectivement ladite matière active et ledit liant,
- on calcule une énergie d'interaction $I_{EL}$ dudit liant avec ledit électrolyte à partir de la mesure de l'angle $\Theta_{EL}$ de contact entre ledit électrolyte et ledit liant,
- on sélectionne ledit liant tel que ledit coefficient d'étalement $\lambda$ soit inférieur à zéro, et que ladite énergie d'interaction $I_{EL}$ soit au moins égale à 60mJ/m$^2$.

Le coefficient d'étalement $\lambda$ du liant est défini de la manière suivante:

$$\lambda = \gamma_{MA} - \gamma_{liant} - \gamma_{MA\backslash liant}$$

dans laquelle $\gamma_{MA}$ et $\gamma_{liant}$ sont les énergies de surface respectivement de la matière active et du liant, et $\gamma_{MA\backslash liant}$ est l'énergie interfaciale entre la matière active et le liant.

La détermination de l'énergie de surface est effectuée selon la mesure de la goutte sessile (G. KRUSS: "Manuel d'utilisation du goniomètre"), c'est à dire en mesurant l'angle de contact d'une goutte d'un liquide de référence, dont la tension superficielle est connue, déposée à la surface de la matière active ou d'un film de liant. La qualité de la mesure de l'angle de contact $\Theta_{MA}$ ou $\Theta_{liant}$ est principalement fonction des paramètre suivants: une surface solide propre et lisse, et des liquides de référence le plus pur possible.

L'énergie de surface de la matière active $\gamma_{MA}$ répond à la formule suivante:

$$\gamma_{MA} = \gamma_{MA}^{Lw} + 2\sqrt{\gamma_{MA}^{+} \cdot \gamma_{MA}^{-}}$$

où $\gamma_{MA}^{Lw}$ est la composante dispersive correspondant aux interactions de Van der Walls, et

$$\gamma_{MA}^{DA} = 2\sqrt{\gamma_{MA}^{+} \cdot \gamma_{MA}^{-}}$$

est la composante correspondant à l'interaction acide-base (donneur/accepteur d'électrons) .

La composante dispersive $\gamma_{MA}^{Lw}$ est mesurée selon la méthode décrite par F.M. FOWKES (Ind. Eng. Chem., 56, 1964, 12-14). On utilise comme liquide de référence un liquide apolaire, tel que le $\alpha$-bromonaphtalène, le diiodométhane, le phosphate de tricrésyle, le dioxolane ou encore un alcane. Dans ce cas $\gamma_{MA}^{DA}=0$, et on a $\gamma_{MA} = \gamma_{MA}^{Lw}$ ou $\gamma_{MA}^{Lw}$ est une fonction de l'angle de contact du liquide apolaire avec la matière active $\Theta_{MA}$.

La mesure de la composante non dispersive s'effectue avec des liquides de référence qui sont des liquides polaires, par exemple de l'eau ou de l'éthylène-glycol, dont les caractéristiques acides et basiques sont connues (R.S. GOUD and C.S. VAN OSS in "Modern approaches to wettability - Theory and applications", M.E. SCHRADER AND G.I. LOEB, Ed. Plenum Press, New-york, 1992). Pour chaque liquide on mesure une composante acide $\gamma_{MA}^{+}$ et une composante basique $\gamma_{MA}^{-}$ qui sont calculées à partir de l'angle de contact du liquide polaire avec la matière active

L'énergie de surface du liant $\gamma_{liant}$ répond à la formule suivante:

$$\gamma_{liant} = \gamma_{liant}^{Lw} + 2\sqrt{\gamma_{liant}^{+} \cdot \gamma_{liant}^{-}}$$

où $\gamma_{liant}^{Lw}$ est la composante dispersive et

$$\gamma_{liant}^{DA} = 2\sqrt{\gamma_{liant}^{+} \cdot \gamma_{liant}^{-}}$$

est la composante correspondant à l'interaction acide-base. Ces deux composantes sont déterminées pour le liant de la même manière que celle décrite précédemment pour la matière active.

Enfin l'énergie interfaciale $\gamma_{MA\backslash liant}$ est calculée à partir des énergies de surface $\gamma_{MA}$ et $\gamma_{liant}$ selon la relation:

$$\gamma_{MA\backslash liant} = \gamma_{MA} + \gamma_{liant} - 2\sqrt{\gamma_{MA}^{Lw} \cdot \gamma_{liant}^{Lw}} - 2\sqrt{\gamma_{MA}^{+} \cdot \gamma_{liant}^{-}} - 2\sqrt{\gamma_{MA}^{-} \cdot \gamma_{liant}^{+}}$$

L'énergie d'interaction $I_{EL}$ est défini de la manière suivante (N.K. ADAME: "Physics on a chemistry of surfaces", 3rd Ed., Oxford University Press, London, 1941):

$$I_{EL} = \gamma_{EL} (1 + \cos \Theta_{EL})$$

où $\gamma_{EL}$ est la tension superficielle de l'électrolyte et $\Theta_{EL}$ est l'angle de contact entre une goutte d'électrolyte et le film de liant.

Le choix du liant est effectué à partir de la combinaison de deux critères relatifs à ses propriétés de surface.

Selon le premier critère, il faut que le coefficient d'étalement $\lambda$ soit négatif ($\lambda < 0$). Dans ce cas le liant forme un film discontinu permettant les échanges électroniques. Lorsque $\lambda$ est positif ($\lambda \geq 0$), le liant forme un film continu qui enrobe et isole la matière active.

Selon le second critère, il faut que l'énergie d'interaction $I_{EL}$ soit au moins égale à 60mJ/m$^2$ ($I_{EL} \geq 60$mJ/m$^2$). Lorsque $I_{EL}$ est élevée, le liant assure un mouillage plus efficace de l'électrode et favorise sa conduction ionique.

La présente invention a comme avantage de permettre de sélectionner immédiatement les polymères utilisables comme liants d'électrode sans recourir au cyclage de générateurs, méthode longue et coûteuse.

La présente invention a également pour objet une électrode de générateur électrochimique à électrolyte alcalin comportant un collecteur de courant et une pâte contenant une matière électrochimiquement active et un liant, caractérisé en ce que ledit liant possède un coefficient d'étalement $\lambda$ inférieur à zéro, et une énergie d'interaction $I_{EL}$ au moins égale à 60mJ/m$^2$.

De préférence, ledit liant est choisi parmi un copolymère d'anhydride maléïque et de styrène et un copolymère d'anhydride maléïque et d'éther de vinyle.

D'autres caractéristiques et avantages de la présente invention apparaîtront au cours des exemples suivants de réalisation, donnés bien entendu à titre illustratif et non limitatif, et dans le dessin annexé sur lequel:

- la figure 1 montre l'évolution de la capacité déchargée Q d'une électrode en cellule de test, exprimée en miliampères-heures par gramme d'alliage hydrurable, en fonction du nombre de cycles N effectués, et
- la figure 2 montre l'évolution de la capacité déchargée C d'un accumulateur étanche, exprimées en miliampères-heures en fonction du nombre de cycle N effectués.

EXEMPLE 1

On caractérise par le procédé de la présente invention un liant polymère qui un copolymère hydrolysé d'éthylène et d'acétate de vinyle (EVAH).

Les calculs des énergies de surface sont basés sur les mesures d'angles de contact comme décrit précédemment. Les liquides de référence utilisés sont le diiodométhane comme liquide apolaire et comme liquides polaires l'eau et l'éthylène-glycol.

Ces mesures ont conduit aux résultats suivants:

$$\lambda = +0,1 \, mJ/m^2$$

$$I_{EL} = 80 \, mJ/m^2$$

L'EVAH ne remplit pas le premier critère selon la présente invention.

On prépare une électrode I comportant comme matière électrochimiquement active un alliage hydrurable de type $AB_n$ où A est un "MISCHMETAL" et B est du nickel partiellement substitué par Mn, Al et/ou Co. L'alliage est mis en suspension dans une solution aqueuse comprenant 0,3% en poids d'hydroxypropylméthylcellulose (HPMC) et 0,3% en poids de poudre de carbone. A cette suspension est ajouté le liant polymère EVAH dans une proportion de 5% en masse de matière sèche. La pâte obtenue, comportant 94,4% en poids de matière active, est enduite sur un support conducteur en mousse de nickel, puis séchée et laminée afin d'ajuster l'épaisseur et la porosité de l'électrode.

EXEMPLE 2

On caractérise par le procédé de la présente invention un liant polymère qui est un polyacrylate de 2-éthylhexyle (PAEH) comme décrit dans l'exemple 1.

Ces mesures ont conduit aux résultats suivants:

$$\lambda = +4 \, mJ/m^2$$

$$I_{EL} = 45 \, mJ/m^2$$

Le PAEH ne remplit aucun des critères selon la présente invention.

On prépare une électrode II comportant comme matière électrochimiquement active un alliage hydrurable de type $AB_n$ comme décrit dans l'exemple 1, à l'exception du fait que l'on ajoute à la suspension le liant polymère PAEH dans une proportion de 5% en masse de matière sèche.

EXEMPLE 3

On caractérise par le procédé de la présente invention un liant polymère qui est le polytétrafluoréthylène (PTFE) comme décrit dans l'exemple 1.

Ces mesures ont conduit aux résultats suivants:

$$\lambda = 12 \, mJ/m^2$$

$$I_{EL} = 49 \, mJ/m^2$$

Le PTFE ne remplit aucun des deux critères selon la présente invention.

On prépare une électrode III comportant comme matière électrochimiquement active un alliage hydrurable de type $AB_n$ comme décrit dans l'exemple 1, à l'exception du fait que l'on ajoute à la suspension le liant polymère PTFE dans une proportion de 5% en masse de matière sèche.

Le PTFE fibrille très rapidement dans les conditions d'élaboration de l'électrode. Il forme alors un réseau discontinu, ce qui est habituellement observé lorsque le coefficient d'étalement du polymère $\lambda$ est négatif.

EXEMPLE 4

On caractérise par le procédé de la présente invention un liant polymère qui est un copolymère de styrène et de butadiène (SBR) greffé par des groupes carboxyles, commercialisé par la société BASF sous la référence "LD 417", de la manière décrits dans l'exemple 1.

Ces mesures ont conduit aux résultats suivants:

$$\lambda = -1mJ/m^2$$

$$I_{EL} = 66mJ/m^2$$

Le SBR carboxylé remplit les deux critères selon la présente invention.

On prépare une électrode IV comportant comme matière électrochimiquement active un alliage hydrurable de type $AB_n$ comme décrit dans l'exemple 1, à l'exception du fait que l'on ajoute à la suspension le liant polymère SBR carboxylé dans une proportion de 5% en masse de matière sèche.

EXEMPLE 5

On caractérise par le procédé de la présente invention un liant polymère qui est un copolymère de styrène et d'anhydride maléïque (SMA) comme décrit dans l'exemple 1.

Ces mesures ont conduit aux résultats suivants:

$$\lambda = -15mJ/m^2$$

$$I_{EL} = 93mJ/m^2$$

Le SMA remplit les deux critères selon la présente invention.

On prépare une électrode V comportant comme matière électrochimiquement active un alliage hydrurable de type $AB_n$ comme décrit dans l'exemple 1, à l'exception du fait que l'on ajoute le liant polymère SMA dans une proportion de 5% en masse de matière sèche.

EXEMPLE 6

On effectue une évaluation électrochimique des électrodes I à V. Le cyclage est réalisé en accumulateurs non-étanches, de capacité nominale 3Ah, ayant pour électrodes négatives respectivement les électrodes I à V et pour électrodes positives des électrodes d'hydroxyde de nickel d'un type connu. L'électrolyte est une solution alcaline de concentration 8,7N dont le composant principal est la potasse KOH.

Le test est effectué à une température de 22°C dans les conditions suivantes:

cycle 1 à 4    charge à $0,2I_c$ pendant 7,5 heures, décharge à $0,2I_c$ jusqu'à 1 volt,
cycle 5    charge à $0,2I_c$ pendant 7,5 heures, décharge à $I_c$ jusqu'à 0,8 volt,

où $I_c$ représente le courant nécessaire pour charger 100% de la capacité théorique de l'accumulateur en une heure. On mesure la capacité déchargée $D_4$ au cycle 4 et la capacité déchargée $D_5$ au cycle 5, exprimées en miliampères-heures par gramme d'alliage hydrurable et on en calcule la perte de capacité en régime rapide $\Delta_{4/5}$ en % entre le quatrième et le cinquième cycle.

L'ensemble des caractéristiques obtenues sont rassemblées dans le tableau 1 ci-dessous

TABLEAU 1

| liant | EVAH | PAEH | PTFE | SBR | SMA |
|---|---|---|---|---|---|
| $\lambda = (mJ/m^2)$ | +0,1 | +4 | +12 | -1 | -15 |
| $I_{EL}$ $(mJ/m^2)$ | 80 | 45 | 49 | 66 | 93 |
| | ↓ | ↓ | ↓ | ↓ | ↓ |
| électrode | I | II | III | IV | V |
| $D_4$ (mAh/g) | 265 | 273 | 294 | 289 | 303 |
| $D_5$ (mAh/g) | 221 | 191 | 259 | 251 | 283 |
| $\Delta_{4/5}$ (%) | 20 | 30 | 12 | 13 | 7 |

On observe que les capacités initiales $D_4$ sont plus élevées et les pertes de capacité en régime rapide $\Delta_{4/5}$ sont plus faibles pour les liant IV et V, qui possèdent un coefficient d'étalement $\lambda$ négatif, par rapport aux liants I et II dont le coefficient d'étalement $\lambda$ est positif. Le PTFE a le comportement d'un liant à coefficient d'étalement $\lambda$ négatif.

EXEMPLE 7

On prépare une électrode VII comportant comme matière électrochimiquement active un alliage hydrurable de type $AB_n$ où A est un "MISCHMETAL" et B est du nickel partiellement substitué par Mn, Al et/ou Co.

L'alliage est mis en suspension dans une solution aqueuse comprenant 0,3% en poids de poudre de carbone et 0,3% en poids d'hydroxypropylméthylcellulose (HPMC). A cette suspension est ajouté le liant polymère PTFE dans une proportion de 1,5% en masse de matière sèche.

La pâte obtenue, comportant 98,1% en poids de matière active, est enduite sur un support conducteur en mousse de nickel, puis séchée et laminée afin d'ajuster l'épaisseur et la porosité de l'électrode.

EXEMPLE 8

On prépare une électrode VIII comportant comme matière électrochimiquement active un alliage hydrurable de type $AB_n$ où A est un "MISCHMETAL" et B est du nickel partiellement substitué par Mn, Al et/ou Co.

L'alliage est mis en suspension dans une solution aqueuse comprenant 0,3% en poids de poudre de carbone et 0,3% en poids d'hydroxypropylméthylcellulose (HPMC). A cette suspension est ajouté le liant polymère SBR greffé par des groupes carboxyles, commercialisé par la société BASF sous la référence "LD 417", dans une proportion de 0,3% en masse de matière sèche.

La pâte obtenue, comportant 99,1% en poids de matière active, est enduite sur un support conducteur en mousse de nickel, puis séchée et laminée afin d'ajuster l'épaisseur et la porosité de l'électrode.

EXEMPLE 9

On effectue une évaluation électrochimique des électrodes VII et VIII. Le cyclage est réalisé en cellule de test dans laquelle l'électrode négative VII ou VIII est placée face à une contre électrode de nickel d'un type connu dont elle est séparée par un séparateur non-tissé en polypropylène. La cellule contient un électrolyte qui est une solution alcaline de concentration 8,7N dont le composant principal est la potasse KOH.

Le test est effectué à une température de 22°C dans les conditions suivantes:

- charge à $I_c$ pendant 1,05 heure, puis
- décharge à $I_c$ pendant 0,8 heure.

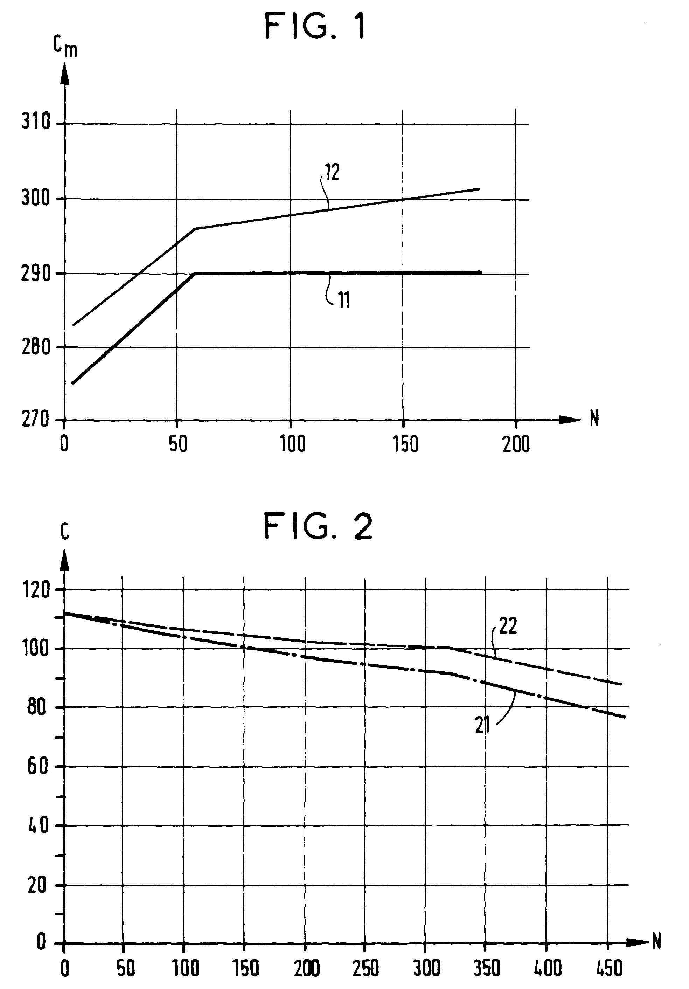

On mesure la capacité déchargée Q exprimée en miliampères-heures par gramme d'alliage hydrurable. La figure 1 montre l'évolution de la capacité Q en fonction du nombre de cycles. Après 150 cycles, les performances de l'électrode VII (courbe 11), contenant du PTFE dont l'énergie d'interaction $I_{EL}$ est inférieure à $60mJ/m^2$, sont inférieures à celles de l'électrode VIII (courbe 12), contenant du SBR carboxylé dont l'énergie d'interaction $I_{EL}$ est supérieure à $60mJ/m^2$.

On effectue ensuite un cyclage en accumulateurs étanches de capacité nominale 120Ah ayant pour électrodes négatives respectivement les électrodes VII et VIII et pour électrodes positives des électrodes d'hydroxyde de nickel d'un type connu. L'électrolyte est une solution alcaline de concentration 8,7N dont le composant principal est la potasse KOH.

Le test est effectué à une température de 22°C dans les conditions suivantes:

- charge à 0,33I$_c$ pendant 3 heures, puis à 0,1I$_c$ pendant 2 heures,
- décharge à I$_c$ pendant 0,7 heure.

On mesure la capacité C déchargée par l'accumulateur exprimées en miliampères-heures. La figure 2 montre l'évolution de la capacité C en fonction du nombre de cycle pour l'accumulateur contenant l'électrode VII (courbe 21) et l'accumulateur contenant l'électrode VIII (courbe 22) . On constate que la capacité de l'électrode VII contenant du PTFE décroît plus vite que celle de l'électrode VIII contenant du SBR carboxylé. Ceci confirme les résultats observés précédemment sur les électrodes.

Enfin on réalise une analyse des gaz contenus à l'intérieurs de deux accumulateurs étanches, contenant respectivement les électrodes VII et VIII, analogues à ceux décrits précédemment mais ayant pour capacité nominale 10,8Ah. Ces accumulateurs sont cyclés à une température de 22°C dans les conditions suivantes:

- charge à 0,2I$_c$ pendant 7,5 heures,
- décharge à 0,2I$_c$ jusqu'à 1 volt.

Lorsque la pression est stabilisé les gaz sonr prélevés et analysés et on obtient les résultats suivants:

TABLEAU 2

| électrode | VII | VIII |
|---|---|---|
| pression stabilisée (bars) | 0,78 | 0,46 |
| O$_2$ | 50% | 70% |
| H$_2$ | 50% | 30% |

Le dégagement d'hydrogène est beaucoup moins important sur l'électrode VIII, contenant du SBR greffé par des groupes carboxyliques, que sur l'électrode VII, contenant du PTFE, ce qui indique que l'électrode VIII est mieux mouillée par l'électrolyte.

## Revendications

1. Procédé de caractérisation d'un liant polymère pour électrode de générateur électrochimique au contact d'un électrolyte comportant un collecteur de courant et une pâte contenant une matière électrochimiquement active et ledit liant, caractérisé en ce qu'il comprend les étapes suivantes:

   - on calcule un coefficient d'étalement λ dudit liant sur ladite matière active à partir de la mesure de l'angle de contact entre des liquides étalons et respectivement ladite matière active et ledit liant,
   - on calcule une énergie d'interaction I$_{EL}$ dudit liant avec ledit électrolyte à partir de la mesure de l'angle de contact entre ledit électrolyte et ledit liant,
   - on sélectionne ledit liant tel que ledit coefficient d'étalement λ soit inférieur à zéro, et que ladite énergie d'interaction IEL soit au moins égale à 60mJ/m$^2$.

2. Electrode de générateur électrochimique à électrolyte alcalin comportant un collecteur de courant et une pâte contenant une matière électrochimiquement active et un liant, caractérisé en ce que ledit liant possède un coefficient d'étalement λ inférieur à zéro, et une énergie d'interaction I$_{EL}$ au moins égale à 60mJ/m$^2$.

3. Electrode selon la revendication 2, caractérisé en ce que ledit liant est choisi parmi un copolymère d'anhydride maléïque et de styrène et un copolymère d'anhydride maléïque et d'éther de vinyle.

# FIG. 1

# FIG. 2

Office européen
des brevets

**RAPPORT DE RECHERCHE EUROPEENNE**

Numéro de la demande

EP 97 40 1746

## DOCUMENTS CONSIDERES COMME PERTINENTS

| Catégorie | Citation du document avec indication, en cas de besoin des parties pertinentes | Revendication concernée | CLASSEMENT DE LA DEMANDE (Int.Cl.6) |
|---|---|---|---|
| A | US 3 507 773 A (GRANGAARD DONALD H) 21 avril 1970<br>* colonne 2, ligne 24 - ligne 34 *<br>* colonne 4, ligne 4 - ligne 42; tableau 1 * | 1 | G01N13/02<br>H01M4/62 |
| A.D | FOWKES F M: "ATTRACTIVE FORCES AT INTERFACES"<br>INDUSTRIAL AND ENGINEERING CHEMISTRY.<br>vol. 56, 1964,<br>pages 40-52, XP000609290<br>* page 43, colonne 2, alinéa 2 *<br>* page 51, colonne 1, ligne 1 - ligne 12 * | 1 | |
| A | WO 93 07464 A (WDA CONTRACTS CORP) 15 avril 1993<br>* page 1, ligne 20 - page 2, ligne 28 *<br>* page 5, ligne 1 - page 6, ligne 6; figures 1-6 * | 1 | |
| P,X | EP 0 740 355 A (ACCUMULATEURS FIXES) 30 octobre 1996<br>* page 2, ligne 3 - ligne 12 *<br>* page 2, ligne 21 - ligne 23 * | 2,3 | DOMAINES TECHNIQUES RECHERCHES (Int.Cl.6)<br><br>G01N |
| A | * page 2, ligne 53 - ligne 56 *<br>* page 8, ligne 31 - ligne 32 * | 1 | |
| X | EP 0 435 635 A (XEROX CORP) 3 juillet 1991<br>* page 2, ligne 1 - ligne 2 *<br>* page 2, ligne 38 - ligne 48 *<br>* page 5, ligne 56 - ligne 58 *<br>* page 7, ligne 19 - ligne 25 * | 2,3 | |
| X | GB 1 415 089 A (VALLEY CO INC) 26 novembre 1975<br>* page 1, ligne 24 - ligne 37 *<br>* page 15, ligne 12 - ligne 30 *<br>* page 18, ligne 14 - ligne 34 * | 2,3 | |

-/--

Le présent rapport a été établi pour toutes les revendications

| Lieu de la recherche | Date d'achèvement de la recherche | Examinateur |
|---|---|---|
| LA HAYE | 3 novembre 1997 | Hocquet, A |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EP 0 821 225 A1

Office européen
des brevets

**RAPPORT DE RECHERCHE EUROPEENNE**

Numéro de la demande

EP 97 40 1746

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| P.X | PATENT ABSTRACTS OF JAPAN vol. 097, no. 008, 29 août 1997 & JP 09 092288 A (SUMITOMO BAKELITE CO LTD), 4 avril 1997. * abrégé * | 2,3 | |

DOMAINES TECHNIQUES
RECHERCHES (Int.Cl.6)

Le present rapport a été établi pour toutes les revendications

| Lieu de la recherche | Date d'achevement de la recherche | Examinateur |
|---|---|---|
| LA HAYE | 3 novembre 1997 | Hocquet, A |